# EUROPEAN PATENT SPECIFICATION

(11) **EP 1 784 286 B1**
(45) Date of publication and mention of the grant of the patent: **29.04.2009**
(21) Application number: 05781619.1
(22) Date of filing: 28.08.2005
(51) Int. Cl.: B25C 1/08

(54) **DRIVER BLADE WITH AUXILIARY COMBUSTION CHAMBER FOR COMBUSTION POWERED FASTENER-DRIVING TOOL**
TREIBER MIT ZUSATZBRENNKAMMER FÜR VERBRENNUNGSKRAFTBETRIEBENES WERKZEUG ZUM EINTREIBEN VON BEFESTIGUNGSELEMENTEN
LAME D'ENTRAINEMENT AVEC CHAMBRE DE COMBUSTION AUXILIAIRE POUR OUTIL D'ENTRAINEMENT D'ELEMENT DE FIXATION A MOTEUR A COMBUSTION

(30) Priority: 01.09.2004 US 931631
(43) Date of publication of application: 16.05.2007
(73) Proprietor: Illinois Tool Works Inc., Glenview IL 60026 (US)
(72) Inventor: PANASIK, Cheryl L., Elburn, IL 60119 (US); TUCKER, Kevin M., Chicago, IL 60660 (US); KOLODZIEJ, Norbert K., Park Ridge, IL 60068 (US); GONG, Yongping, Glenview, IL 60026 (US); FISCHER, Robert B., Roselle, IL 60172 (US)
(74) Representative: Finnie, Peter John
(86) International application number: PCT/IB2005/052813
(87) International publication number: WO 2006/025012

(56) References cited:
- EP-A- 0 560 049
- US-A- 3 615 049
- US-A- 6 102 270
- US-A- 6 109 165
- US-A- 6 145 724
- US-A- 6 155 472

## Description

The present invention relates generally to a driver blade according to the preamble of claim 1, a combined piston and driver blade according to the preamble of claim 6 and a combustion chamber according to the preamble of claim 8, for use in fastener-driving tools used to drive fasteners into workpieces, and specifically to combustion-powered fastener-driving tools, also referred to as combustion tools.

Combustion-powered tools are known in the art, and one type of such tools, also known as IMPULSE® brand tools for use in driving fasteners into workpieces, is described in commonly assigned patents to Nikolich U.S. Pat. Re. No. 32,452, and U.S. Pat. Nos. 4,522,162; 4,483,473; 4,483,474; 4,403,722; 5,197,646; 5,263,439 and 6,145,724. Similar combustion- powered nail and staple driving tools are available commercially from ITW-Paslode of Vernon Hills, Illinois under the IMPULSE® and PASLODE® brands. US Pat. Nos. 6,109,165, which is considered the closest prior-art, and 6,145,724 also describe combustion powered driving tools.

Such tools incorporate a generally pistol-shaped tool housing enclosing a small internal combustion engine. The engine is powered by a canister of pressurized fuel gas, also called a fuel cell. A battery-powered electronic power distribution unit produces a spark for ignition, and a fan located in a combustion chamber provides for both an efficient combustion within the chamber, while facilitating processes ancillary to the combustion operation of the device. Such ancillary processes include: inserting the fuel into the combustion chamber; mixing the fuel and air within the chamber; and removing, or scavenging, combustion by-products. The engine includes a reciprocating piston with an elongated, rigid driver blade disposed within a single cylinder body.

Upon the pulling of a trigger switch, which causes the spark to ignite a charge of gas in the combustion chamber of the engine, the combined piston and driver blade is forced downward to impact a positioned fastener and drive it into the workpiece. The piston then returns to its original, or pre-firing position, through differential gas pressures within the cylinder. Fasteners are fed magazine-style into the nosepiece, where they are held in a properly positioned orientation for receiving the impact of the driver blade.

Conventional combustion fastener driving tools employ straight magazines holding approximately 30 fasteners each. In some operational applications, particularly commercial construction projects, there is a need for a tool which is capable of driving a greater number of fasteners in a shorter period of time. The use of coil magazines with greater fastener capacities is common in electrically or pneumatically powered fastener driving tools, but for various reasons, such magazines have not become acceptable with combustion tools. Reasons for the undesirability of such high capacity magazines in these tools include the additional weight of the fasteners causing premature operator fatigue, and the additional energy required to operate the coil magazine fastener advance has not proved reliable.

A side from the size of the magazine of conventional combustion tools, the weight, balance and overall ergonomics of conventional tools have not been suitable for high volume commercial construction applications, among others. In addition, when more rapid firing rates are contemplated for such tools, care must be taken to ensure that at the conclusion of each firing cycle, the piston returns to its prefiring position before the next firing cycle begins. Failure of the piston to properly return has been known to cause tool jams and other operational difficulties.

Thus, there is a need for a combustion-powered fastener-driving tool which is capable of operating reliably with high capacity magazines, including but not limited to coil magazines. There is also a need for a combustion-powered fastener-driving tool which is designed for driving fasteners from such a magazine at a relatively high rate.

### BRIEF SUMMARY

The above-listed needs are met or exceeded by the present driver blade according to independent claim 1, preferably provided associated with a piston. The driver blade is generally hollow, which reduces weight, thus reducing overall tool weight and also requiring less energy to return to the prefiring position. In addition, the substantially hollow configuration increases the volume of the combustion chamber, thus increasing the firing power of the tool. A lower end of the driver blade is provided with a solid cross-section for facilitating the fastener driving operation.

More specifically, a driver blade for use in a combustion-powered fastener-driving tool includes an elongate tubular body having a combustion end and a driving end, the combustion end being configured for attachment to a piston, and the driving end having a substantially solid cross-section.

In another embodiment, a combined piston and driver blade for a combustion powered fastener-driving tool according to independent claim 6 includes a piston head having an outer periphery configured for slidably engaging a cylinder and defining a central aperture, an elongate driver blade tubular body having a combustion end and a driving end, the combustion end being configured for attachment to the piston, and the driving end having a substantially solid cross-section.

In still another embodiment, a combustion chamber for a fastener-driving tool according to independent claim 8 includes a cylinder head, a valve sleeve, a piston defining a central aperture, a driver blade secured to the piston and having a tubular body defining a closed chamber in fluid communication with the piston.

### BRIEF DESCRIPTION OF THE SEVERAL VIEWS OF THE DRAWINGS

FIG. 1 is a fragmentary front vertical section of a combustion-powered fastener-driving tool suitable for incorporating the present driver blade; and

FIG. 2 is a fragmentary vertical section of the present piston and driver blade assembly.

### DETAILED DESCRIPTION

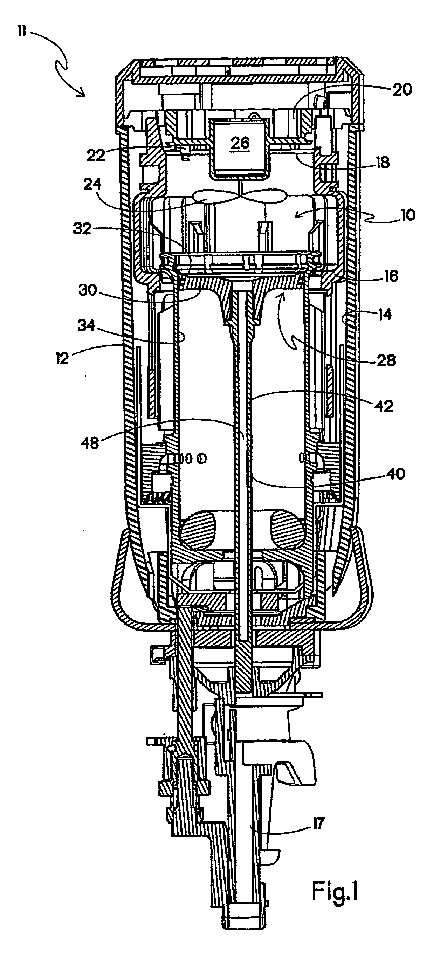

Referring now to FIG. 1, a combustion chamber for a combustion-powered fastener-driving tool incorporating the present invention is generally designated 10. The present combustion chamber 10 and associated components is suitable for use in any type of combustion-powered fastener-driving tool, generally designated 11, including but not limited to the general type described in detail in the patents listed above and incorporated by reference in the present application. A housing 12 of the tool 11 encloses the combustion chamber 10 within a housing main chamber 14.

The combustion chamber 10 is defined on the sides by a generally cylindrical reciprocating valve sleeve 16, which as is known in the art, reciprocates between an open or exhaust position (shown here) when the tool is at rest or between firings, and a closed or combustion position just prior to and during the firing portion of the tool cycle. The closed position is achieved by pressing the tool against a workpiece, which depresses a biased nosepiece workpiece contact element 17. At an upper end 18, the combustion chamber 10 is defined by a cylinder head 20. While other configurations are contemplated, the cylinder head 20 is provided with a spark plug 22 and a fan 24 which depends into the combustion chamber. A motor 26 powers the fan 24.

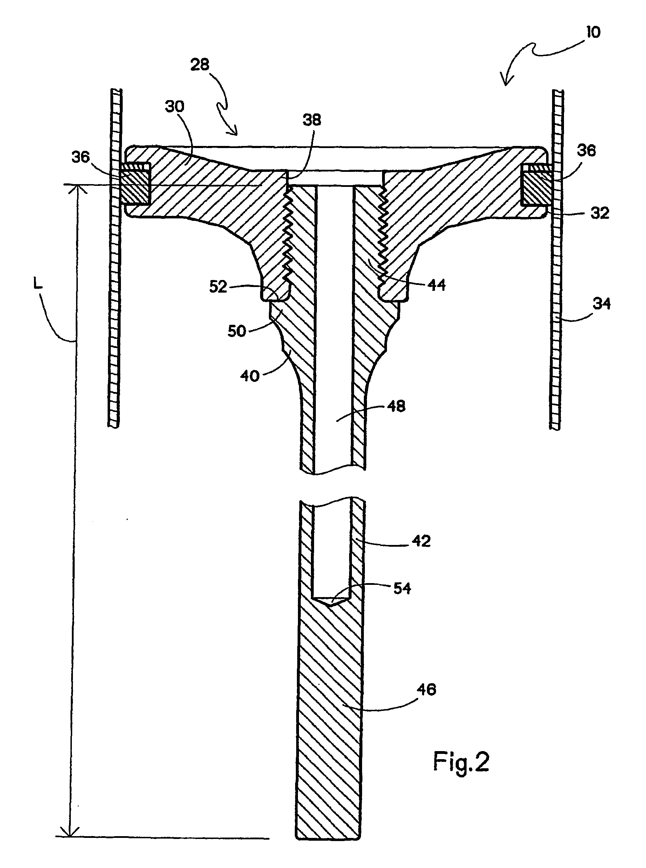

Referring now to FIGs. 1 and 2, a lower end of the combustion chamber 10 is defined by a piston, generally 28, in an uppermost or prefiring position. The piston 28 has a body or head 30 which is circular when viewed from above and has an outer peripheral edge 32 configured for slidably engaging a cylinder 34. As is known in the art, piston rings 36 (various configurations of which are depicted) are typically provided on the piston head 30 to maintain an operational seal and reduce wear on the sliding components. The piston head 30 defines a central aperture 38 which is preferably threaded or provided with some other fastening formation. It will be seen that the central aperture 38 defines a portion of the lower end of the combustion chamber 10.

A driver blade 40 is secured to the piston 28 and reciprocates with the piston in the cylinder 34 for driving fasteners into workpieces as is well known in the art. While conventional driver blades are solid to maximize impact force and maintain structural integrity after repeated firing cycles, an important feature of the present driver blade 40 is that it is substantially hollow. It has been found that in some applications, strength is not sacrificed, but a lighter weight component is obtained. Also, by being substantially hollow, the driver blade 40 increases the volume of the combustion chamber 10. This increased volume provides more fastener driving power and a more rapid, yet reliable return of the driver blade 40 to the prefiring position.

More specifically, the driver blade 40 has an elongate, generally tubular body 42 having a combustion end 44 and a driving end 46 opposite the combustion end. For best results, the combustion end 44 is open to ambient. The body 42 has a hollow interior and defines a driver blade chamber 48 which, through the combustion end 44, is in fluid communication with the central aperture 38 of the piston 28 and ultimately, the combustion chamber 10. As such, the driver blade chamber 48 becomes an auxiliary combustion chamber.

The combustion end 44 is configured for attachment to the piston 28, and in the preferred embodiment is externally threaded to threadably engage the threaded central aperture 38. Other known fastening technologies are contemplated, including welding, chemical adhesives, spring locks, bayonet lugs and grooves and the like. For additional strength and positive engagement with the piston 28, the driver blade 40 is provided with a radially thickened portion 50 near the combustion end 44 defining a shoulder 52. Opposite the combustion end 44, a closed end 54 of the driver blade chamber 48 is preferably conically shaped (seen in FIG. 2) for facilitated fabrication and/or distribution of combustion forces.

For achieving a positive driving action when contacting fasteners, the driving end 46 has a substantially solid cross-section. Beneficial results have been found when the solid driving end 46 takes up approximately 15% of the total length of the body 42, and the driver blade chamber 48 represents the remainder of the total length L of the body, or approximately 85%. Thus, in one particular exemplary embodiment, the total length of the body 42 is 19,05 cm (7.5 inches), and the driver blade chamber 48 is 16,205 cm (6.38 inches). The above-described percentages and lengths are exemplary only, and may vary to suit the application, power level of the tool and type of fastener being driven, among other parameters known to skilled practitioners.

While a particular embodiment of the present driver blade with auxiliary combustion chamber for a combustion-powered fastener-driving tool has been described herein, it will be appreciated by those skilled in the art that changes and modifications may be made thereto without departing from the invention in its broader aspects and as set forth in the following claims.

## Claims

1. A driver blade (40) for use in a combustion-powered fastener-driving tool, comprising:
an elongate tubular body (42) having a combustion end (44), a driving end (46) and a central portion;
said combustion end (44) being configured for attachment to a piston (28);
said driving end (46) having a solid cross-section,
**characterised in that** the body (42) has a hollow interior defining a driver blade chamber (48) extending through said combustion end (44) into said central portion.

2. The driver blade of claim 1 wherein said combustion end (44) is open to ambient, and said chamber (48) is in fluid communication with said open end, forming an auxiliary combustion chamber.

3. The driver blade of claim 1 wherein said tubular body (42) extends 85% of a length of said body,

4. The driver blade of claim 1 wherein said combustion end (44) is threaded.

5. The driver blade of claim 1 wherein said combustion end (46) has a radially thickened portion (50) for engaging the piston (28).

6. A combined piston (28) and driver blade (40) for a combustion powered fastener-driving tool, comprising:
a piston head (36) having an outer periphery configured for slidably engaging a cylinder (34), and defining a central aperture;
an elongate driver blade tubular body (42) having a combustion end (44), a driving end (46) and a central portion; said combustion end (44) being configured for attachment to said piston (28); and
said driving end (46) having a solid cross-section; **characterised in that** the body (42) has a hollow interior defining a driver blade chamber (48) extending through said combustion end (44) into said central portion.

7. The combination of claim 6 wherein said aperture is threaded and said combustion end (44) is threaded to engage said aperture.

8. A combustion chamber (10) for a fastener-driving tool, comprising:
a cylinder head (20);
a valve sleeve;
a piston (28) defining a central aperture; and
a driver blade (40) secured to said piston and having a tubular body (42), the tubular body having a combustion end (44), a driving end (46) and a central portion, the combustion end (44) being configured for attachment to a piston (28), **characterised in that**
the body (42) has a hollow interior defining a driver blade chamber (48) in fluid communication with said piston (28), the chamber (48) extending through said combustion end (44) into said central portion.

9. The combustion chamber of claim 8 wherein driving end (46) has a solid cross-section.

10. The combustion chamber of claim 8 wherein said tubular body (42) forms an auxiliary combustion chamber (48) in fluid communication with said combustion chamber.

## Patentansprüche

1. Treiber (40) zur Verwendung in einem verbrennungskraftbetriebenen Werkzeug zum Eintreiben von Befestigungselementen, mit
einem länglichen röhrenförmigen Körper (42) mit einem Verbrennungsende (44), einem Treibende (46) und einem mittleren Teil;
wobei das Verbrennungsende (44) zur Befestigung an einem Kolben (28) konfiguriert ist;
wobei das Treibende (46) einen massiven Querschnitt aufweist,
**dadurch gekennzeichnet, dass** der Körper (42) einen hohlen Innenraum aufweist, der eine Treiberkammer (48) definiert, die sich durch das Verbrennungsende (44) in den mittleren Teil erstreckt.

2. Treiber nach Anspruch 1, wobei das Verbrennungsende (44) zur Umgebung offen ist und die Kammer (48) in Strömungsverbindung mit dem offenen Ende steht, wobei eine Zusatzbrennkammer gebildet wird.

3. Treiber nach Anspruch 1, wobei sich der röhrenförmige Körper (42) über 85% einer Länge des Körpers erstreckt.

4. Treiber nach Anspruch 1, wobei das Verbrennungsende (44) mit einem Gewinde versehen ist.

5. Treiber nach Anspruch 1, wobei das Verbrennungsende (44) einen radial verdickten Teil (50) zur Ineingriffnahme des Kolbens (28) aufweist.

6. Kombinierter Kolben (28) und Treiber (40) für ein verbrennungskraftbetriebenes Werkzeug zum Eintreiben von Befestigungselementen, mit Folgendem:
einem Kolbenkopf (36), der einen Außenumfang aufweist, welcher zum verschiebbaren Eingriff eines Zylinders (34) konfiguriert ist, und eine mittlere Öffnung definiert;
einem länglichen, röhrenförmigen Treiberkörper (42), der ein Verbrennungsende (44), ein Treibende (46) und einen mittleren Teil aufweist; wobei das Verbrennungsende (44) zur Befestigung an dem Kolben (28) konfiguriert ist; und
wobei das Treibende (46) einen massiven Querschnitt aufweist; **dadurch gekennzeichnet, dass** der Körper (42) einen hohlen Innenraum aufweist, der eine Treiberkammer (48) definiert, die sich durch das Verbrennungsende (44) in den mittleren Teil erstreckt.

7. Kombination nach Anspruch 6, wobei die Öffnung ein Gewinde aufweist und das Verbrennungsende (44) ein Gewinde zum Eingriff mit der Öffnung aufweist.

8. Brennkammer (10) für ein Werkzeug zum Eintreiben von Befestigungselementen, mit Folgendem:
einem Zylinderkopf (20);
einer Ventilhülse;
einem eine mittlere Öffnung definierenden Kolben (28) ; und
einem an dem Kolben befestigten Treiber (40), der einen röhrenförmigen Körper (42) aufweist, wobei der röhrenförmige Körper ein Verbrennungsende (44), ein Treibende (46) und einen mittleren Teil aufweist, wobei das Verbrennungsende (44) zur Befestigung an einem Kolben (28) konfiguriert ist;
**dadurch gekennzeichnet, dass**
der Körper (42) einen hohlen Innenraum aufweist, der eine Treiberkammer (48) definiert, die mit dem Kolben (28) in Strömungsverbindung steht, wobei sich die Kammer (48) durch das Verbrennungsende (44) in den mittleren Teil erstreckt.

9. Brennkammer nach Anspruch 8, wobei das Treibende (46) einen massiven Querschnitt aufweist.

10. Brennkammer nach Anspruch 8, wobei der röhrenförmige Körper (42) eine Zusatzbrennkammer (48) bildet, die mit der Brennkammer in Strömungsverbindung steht.

## Revendications

1. Lame d'entraînement (40) destinée à être utilisée dans un outil d'entraînement d'élément de fixation à moteur à combustion, comprenant :
un corps tubulaire allongé (42) ayant une extrémité de combustion (44), une extrémité d'entraînement (46) et une portion centrale ;
ladite extrémité de combustion (44) étant configurée pour être attachée à un piston (28) ;
ladite extrémité d'entraînement (46) ayant une section transversale pleine,
**caractérisée en ce que** le corps (42) a un intérieur creux définissant une chambre (48) de lame d'entraînement s'étendant à travers ladite extrémité de combustion (44) dans ladite portion centrale.

2. Lame d'entraînement selon la revendication 1, dans laquelle ladite extrémité de combustion (44) est ouverte à l'air ambiant et ladite chambre (48) est en communication fluidique avec ladite extrémité ouverte, en formant une chambre de combustion auxiliaire.

3. Lame d'entraînement selon la revendication 1, dans laquelle ledit corps tubulaire (42) s'étend sur 85% d'une longueur dudit corps.

4. Lame d'entraînement selon la revendication 1, dans laquelle ladite extrémité de combustion (44) est filetée.

5. Lame d'entraînement selon la revendication 1, dans laquelle ladite extrémité de combustion (46) a une portion radialement épaissie (50) pour s'engager avec le piston (28).

6. Piston (28) et lame d'entraînement (40) combinés, pour un outil d'entraînement d'élément de fixation à moteur à combustion, comprenant :
une tête de piston (36) ayant une périphérie extérieure configurée pour s'engager par coulissement avec un cylindre (34), et définissant une ouverture centrale ;
un corps tubulaire allongé (42) de lame d'entraînement, ayant une extrémité de combustion (44), une extrémité d'entraînement (46) et une portion centrale ; ladite extrémité de combustion (44) étant configurée pour être attachée audit piston (28) ; et
ladite extrémité d'entraînement (46) ayant une section transversale pleine ; **caractérisés en ce que** le corps (42) a un intérieur creux définissant une chambre (48) de lame d'entraînement s'étendant à travers ladite extrémité de combustion (44) dans ladite portion centrale.

7. Combinaison selon la revendication 6, dans laquelle ladite ouverture est filetée et ladite extrémité de combustion (44) est filetée, pour s'engager avec ladite ouverture.

8. Chambre de combustion (10) pour un outil d'entraînement d'élément de fixation, comprenant :
une tête cylindrique (20) ;
un manchon de soupape ;
un piston (28) définissant une ouverture centrale ; et
une lame d'entraînement (40) fixée audit piston et ayant un corps tubulaire (42), le corps tubulaire ayant une extrémité de combustion (44), une extrémité d'entraînement (46) et une portion centrale, l'extrémité de combustion (44) étant configurée pour être attachée à un piston (28),
**caractérisée en ce que**
le corps (42) a un intérieur creux définissant une chambre (48) de lame d'entraînement en communication fluidique avec ledit piston (28), la chambre (48) s'étendant à travers ladite extrémité de combustion (44) dans ladite portion centrale.

9. Chambre de combustion selon la revendication 8, dans laquelle l'extrémité d'entraînement (46) a une section transversale pleine.

10. Chambre de combustion selon la revendication 8, dans laquelle ledit corps tubulaire (42) forme une chambre de combustion auxiliaire (48) en communication fluidique avec ladite chambre de combustion.
